# EUROPÄISCHE PATENTSCHRIFT

(11) **EP 4 263 317 B1**
(45) Veröffentlichungstag und Bekanntmachung des Hinweises auf die Patenterteilung: **03.09.2025**
(21) Anmeldenummer: 21835768.9
(22) Anmeldetag: 15.12.2021
(51) Int. Cl.: B61F 5/52, B61F 5/30, B29C 70/32, B29D 99/00

(54) **QUERTRÄGER FÜR EIN DREHGESTELL UND VERFAHREN ZU DESSEN HERSTELLUNG**
CROSS BEAM FOR A BOGIE AND METHOD OF PRODUCING THE SAME
TRAVERSE POUR UN BOGIE ET SON PROCÉDÉ DE PRODUCTION

(30) Priorität: 16.12.2020 DE 102020133693
(43) Veröffentlichungstag der Anmeldung: 25.10.2023
(73) Patentinhaber: CRRC QINGDAO SIFANG CO., LTD., Shandong 266111 (CN); CG RAIL - CHINESISCH-DEUTSCHES FORSCHUNGS- UND ENTWICKLUNGSZENTRUM FÜR BAHN- UND VERKEHRSTECHNIK DRESDEN GMBH, 01067 Dresden (DE)
(72) Erfinder: TIAN, Aiqin, Qingdao, Shandong 266111 (CN); ZHONG, Chongcheng, Qingdao, Shandong 266111 (CN); WANG, Shi, Qingdao, Shandong 266111 (CN); ZHANG, Yi, Qingdao, Shandong 266111 (CN); FU, Yu, Qingdao, Shandong 266111 (CN); ZHANG, Lianhe, Qingdao, Shandong 266111 (CN); CUI, Jian, Qingdao, Shandong 266111 (CN); LIN, Haobo, Qingdao, Shandong 266111 (CN); ULBRICHT, Andreas, 01067 Dresden (DE); HUFENBACH, Werner, 01067 Dresden (DE); ZEIDLER, Florian, 01067 Dresden (DE); HAUSCHILD, Jonas, 01067 Dresden (DE); HALATA, Maik, 01067 Dresden (DE); MARTIN, Bert, 01067 Dresden (DE); ILLGNER, Jens, 01067 Dresden (DE); SOLTYSIAK, Stefan, 01067 Dresden (DE); IRMSCHER, Patrick, 01067 Dresden (DE)
(74) Vertreter: Winter, Brandl - Partnerschaft mbB
(86) Internationale Anmeldenummer: PCT/EP2021/085924
(87) Internationale Veröffentlichungsnummer: WO 2022/129189

(56) Entgegenhaltungen:
- EP-A2- 0 245 816
- WO-A1-2018/104463
- WO-A1-2019/121524
- FR-A1- 2 572 788

## Beschreibung

Die Erfindung betrifft einen Querträger für ein Drehgestell mit mindestens zwei Radsätzen, die über Seitenelemente mit dem Querträger verbindbar sind, ein Drehgestell aufweisend den Querträger, ein Verfahren zur Herstellung des Querträgers sowie dessen Verwendung.

Als Drehgestell wird das Laufwerk eines Schienenfahrzeugs bezeichnet, wenn die Radsätze in einem gegenüber dem Wagenkasten drehbaren Rahmen gelagert werden. Der Drehgestellrahmen weist häufig zwei senkrecht zu den Achsen der Radsätze angeordnete Längsträger auf, die mit den Radsätzen und jeweils mit einem oder mehreren Querträgern, z. B. mittels einer Federung, miteinander verbunden sind (H-Form). Am Rahmen können weitere Teile des Drehgestells, z. B. die Federung und Dämpfung sowie Motor-, Getriebe- und Bremselemente, angeordnet sein. Üblicherweise ist der Wagenkasten über einen Drehzapfen mit mindestens einem der Querträger des Drehgestells verbunden, wobei der Drehzapfen auch Längskräfte des Wagenkastens auf den oder die Querträger überträgt.

Bei Drehgestellen in Stahlbauweise sind Ausführungen des Querträgers als kastenförmige Schweißkonstruktion bekannt, z. B. aus der EP 2 386 454 A1. Die EP 0 857 635 A2 offenbart ein Drehgestell mit einem Rahmen, der aus zwei gekröpften Längsträgern in Kastenbauweise und zwei rohrförmigen Querträgern besteht.

Auch für Drehgestelle in faserverbundgerechter Bauweise existieren verschiedene Ansätze.

So offenbart die DE 36 12 797 C1 ein Drehgestell in Faserverbundbauweise mit doppel-H-förmigem Rahmen, also zwei Querträgern zwischen den Längsträgern. Die Querträger sind mit einer torsionselastischen Platte verbunden, die eine vielfach unterschiedliche Faserorientierung aufweisen muss.

Die DE 36 12 176 C2 offenbart einen Biegeträger, insbesondere für den Drehgestellrahmen eines Schienenfahrzeuges, bestehend aus einer zumindest in der Biegeträgermitte relativ biegesteifen, an den Biegeträger-Endabschnitten elastisch ausgebildeten Faserverbundenstruktur mit einem oberen und einem unteren, als Ober- bzw. Untergurt mit jeweils in Trägerlängsrichtung unidirekionaler Faserichtung ausgebildeten und sich über die gesamte Biegeträgerlänge erstreckenden Faserstrang und mit einem zwischen den Fasersträngen als Abstandhalter angeordneten Faserverbundkern, der aus lammellenartig über die Biegeträgerbreite verteilten Faserverbund-Schubstegen mit einer zur Trägerlängsrichtung geneigten Faserorientierung sowie aus zwischen den Schubstegen angeordneten Stützkörpern zusammengesetzt ist.

In der EP 0 031 008 A1 ist der H-förmige Rahmen eine integrale, vergleichsweise kompliziert geformte Faserverbundstruktur.

Die DE 10 2017 102 561 A1 offenbart eine Anordnung zur Anbindung eines Querträgers zur Drehzapfenaufnahme an zwei unteren Längsträgern eines Wagenteils für ein Schienenfahrzeug.

Weiterhin offenbart die AT 51 77 94 B1 eine Befestigungseinrichtung mit einem Geräteträger und einem Wagenkasten eines Schienenfahrzeugs, wobei der Wagenkasten an seiner Unterseite mit C-Nuten ausgestattet ist, wobei der Geräteträger mit mindestens einem elastischen Verbindungsteil an einer C-Nut des Wagenkastens lösbar verbunden ist.

Die EP 0 245 816 A2 offenbart ein leichtes Strukturelement mit ausreichender Steifigkeit und Festigkeit und insbesondere ein faserverstärktes Strukturelement.

Aufgabe der Erfindung ist es, einen Querträger für ein Drehgestell in vorteilhaft faserverbundgerechter, aber dennoch einfach umzusetzender Bauweise sowie ein besonders einfaches Verfahren zu dessen Herstellung anzugeben.

Die Aufgabe wird gelöst durch einen Querträger für ein Drehgestell mit den Merkmalen des Anspruchs 1, ein Drehgestell aufweisend den Querträger nach Anspruch 3 sowie ein Verfahren zur Herstellung des Querträgers mit den Merkmalen des Anspruchs 5. Die Erfindung betrifft außerdem die Verwendung des Querträgers gemäß Anspruch 9. Weiterbildungen der Erfindung sind in Unteransprüchen angegeben.

Ein erfindungsgemäßer Querträger für ein Drehgestell mit mindestens zwei Radsätzen, die über Seitenelemente mit dem Querträger verbindbar sind, ist als Hohlkammerprofil aus einem Faser-Kunststoff-Verbund ausgebildet und weist mindestens drei nebeneinander angeordnete Hohlkammern auf, die über mindestens eine äußere Faserlage miteinander verbunden sind, wobei die äußere Faserlage zumindest bereichsweise zumindest die Flächen des Querträgers bedeckt, die nicht zur Anordnung der Seitenelemente vorgesehen sind. Ferner ist eine der mindestens drei Hohlkammern des Querträgers, z. B. die mittlere von drei Hohlkammern, ganz oder teilweise als Druckluftspeicher ausgebildet.

Vorteilhaft verbessert die erfindungsgemäße Ausführung des Querträgers als integrales Bauteil die Gesamtsteifigkeit des Drehgestells.

Der erfindungsgemäße Querträger ist für verschiedene Bauformen von Drehgestellen, insbesondere für Schienenfahrzeuge, geeignet. Der Querträger ist z. B. über einen Drehzapfen mit einem Wagenkasten eines Schienenfahrzeugs verbindbar. An mindestens zwei sich gegenüberliegenden Flächen des Querträgers sind Seitenelemente des Drehgestells anordenbar, wobei jeweils mindestens ein Seitenelement an einer dieser Seitenflächen angeordnet sein kann. Die Seitenelemente sind im Drehgestell quer zum Querträger angeordnet und können beispielsweise Längsträger oder gelenkig mit dem Querträger verbindbare Achshebel oder Federelemente, z. B. Blattfedern, sein.

Der Querträger ist als Hohlkammerprofil aus einem Faser-Kunststoff-Verbundwerkstoff ausgebildet, wobei im Sinne der Erfindung ein Faser-Kunststoff-Verbund (FKV) ein Verbundwerkstoff ist, der in eine Kunststoffmatrix eingebettete Verstärkungsfasern, z. B. Kohlenstofffasern, Glasfasern, Aramidfasern, etc., enthält.

Als Hohlkammerprofil wird im Sinne der Erfindung ein langgestrecktes oder plattenförmiges Bauteil bezeichnet, d. h. ein Bauteil, welches in eine Raumrichtung oder in zwei Raumrichtungen deutliche größere Abmessungen aufweist, als in die, zu dieser Raumrichtung senkrechten Raumrichtungen oder als in die, zu diesen Raumrichtungen senkrechte Raumrichtung, dessen inneres Volumen nicht vollständig mit einem Material, z. B. mit dem Material der äußeren Wandung, ausgefüllt ist, sondern bei dem im inneren Volumen Material stegförmig zwischen zwei im Allgemeinen sich gegenüberliegenden Flächen angeordnet ist.

Vorzugsweise ist der Querträger ein geometrischer Körper in Form eines Quaders. Der Querträger kann jedoch auch ganz allgemein prismenförmig ausgebildet sein.

Der Querträger als Hohlkammerprofil weist mindestens drei nebeneinander angeordnete Hohlkammern auf. Die Hohlkammern sind langgestreckt, d. h. sie weisen in einer Raumrichtung eine größere Abmessung als, insbesondere deutlich größere Abmessung als, z. B. eine mehr als doppelt so große Abmessung wie, in den anderen beiden Raumrichtungen auf. Die Abmessung in diese Raumrichtung wird im Folgenden als Länge einer Hohlkammer und entsprechend auch als Länge des Querträgers bezeichnet. Die Hohlkammern sind so nebeneinander, d. h. in einer Raumrichtung aufeinander folgend, angeordnet, dass jeweils eine der Seitenflächen einer Hohlkammer, die mindestens eine Kante aufweist, die eine Länge ist, in Kontakt mit einer dieser Seitenflächen der daneben angeordneten Hohlkammer ist. Mit anderen Worten sind die Hohlkammern in einer Richtung aufeinander folgend angeordnet, die im Einbauzustand des Querträgers im Drehgestell der vorgesehenen Fahrtrichtung des Drehgestells entspricht.

Ist der Querträger im Drehgestell angeordnet, handelt es sich bei dessen Länge damit um die Abmessung quer zur vorgesehenen Fahrtrichtung. Dabei korreliert die Länge des Querträgers mit dem Abstand der an demselben Radsatz angeordneten, sich gegenüberliegenden Seitenelemente zueinander. Die Seitenelemente des Drehgestells sind an den Flächen angeordnet, deren Kanten nicht in die der Länge zugeordnete Raumrichtung ausgerichtet sind.

In diesem Sinne wird die Abmessung des Querträgers in eine zur Länge senkrechte Raumrichtung, die nicht die Raumrichtung ist, in der die Hohlkammern nebeneinander angeordnet sind, als Höhe des Querträgers bezeichnet. Ist der Querträger im Drehgestell angeordnet, ist die Höhe in die Raumrichtung ausgerichtet, die im Wesentlichen senkrecht zum Boden ist. Die Abmessung in die sowohl zur Raumrichtung der Länge als auch der Höhe senkrechte Raumrichtung wird als Breite des Querträgers bezeichnet. Ist der Querträger im Drehgestell angeordnet, ist die Breite die Abmessung des Querträgers in der vorgesehenen Fahrtrichtung.

Durch die Anordnung der mindestens drei Hohlkammern nebeneinander ist der Querträger als ein Hohlkammerprofil mit mindestens zwei Stegen, die im Wesentlichen in die der Länge zugeordnete Raumrichtung ausgerichtet sind, ausgebildet.

Der als Hohlkammerprofil ausgebildete Querträger weist im Allgemeinen zwei offene Außenflächen auf, d. h. Flächen, durch die das innere Volumen der einzelnen Hohlkammern zugängig ist. Eine Draufsicht auf jede dieser Außenflächen zeigt mindestens drei durch Stege voneinander abgetrennte Hohlkammern. Einzelne oder alle dieser Hohlkammern können durch an den offenen Flächen befestigbare Verschlusselemente verschlossen werden. Die von den offenen Außenflächen verschiedenen Außenflächen des Querträgers sind geschlossene Flächen, durch die das innere Volumen des Querträgers nur über zerspanend in die Außenflächen eingebrachte Aussparungen zugängig ist. Vorteilhafterweise entsprechen die offenen Außenflächen des Querträgers den Flächen, die zur Anordnung der Seitenelemente des Drehgestells vorgesehen sind. Dadurch können auf besonders platzsparende Weise in den Hohlkammern des Querträgers Komponenten des Drehgestells angeordnet sein, die zur Anbindung an andere Komponenten des Drehgestells aus dem Querträger hinausgeführt werden müssen.

Eine Hohlkammer des Querträgers kann den gleichen Querschnitt wie eine zweite Hohlkammer des Querträgers aufweisen oder einen von dem Querschnitt einer zweiten Hohlkammer des Querträgers verschiedenen Querschnitt haben.

Durch Anordnung der Hohlkammern nebeneinander entstehen zwei Flächen des Querträgers, die sich aus den entsprechenden, geschlossenen Außenflächen der Hohlkammern zuzüglich der doppelten Stärke der äußeren Faserlage zusammensetzen, so dass deren Flächeninhalt im Wesentlichen der Summe aus den Flächeninhalten der entsprechenden, nebeneinander angeordneten, geschlossenen Außenflächen der Hohlkammern entspricht. Diese Flächen des Querträgers werden im Folgenden als Grundflächen bezeichnet. Ist der Querträger ein Quader, entsprechen die Kanten der Grundflächen Länge und Breite des Querträgers.

Die beiden Grundflächen des Querträgers können jeweils selbst eine ebene oder eine gekrümmte Fläche bilden oder sich aus ebenen oder gekrümmten Teilflächen zusammensetzen, die in einem von 0° verschiedenen Winkel zueinander ausgerichtet sein können, wobei eine Teilfläche z. B. jeweils eine Außenfläche einer Hohlkammer sein kann. Die Grundflächen weisen jedoch keine Stufen oder keinen Versatz zwischen den Außenflächen der einzelnen Hohlkammern auf.

Die mindestens drei Hohlkammern des Querträgers sind durch mindestens eine äußere Faserlage in ihrer aufeinanderfolgenden Anordnung miteinander verbunden, wobei diese äußere Faserlage zumindest bereichsweise zumindest die Flächen des Querträgers bedeckt, die nicht zur Anordnung der Seitenelemente vorgesehen sind, insbesondere die Grundflächen des Querträgers und die geschlossenen Flächen, die nicht zur Anordnung der Seitenelemente vorgesehen sind. Die äußere Faserlage bedeckt diese Flächen des Querträgers in dem Sinne zumindest bereichsweise, dass auf allen genannten Flächen die äußere Faserlage angeordnet ist, aber jede dieser Flächen nicht vollständig von der äußeren Faserlage bedeckt sein muss. Vorzugsweise ist der, von der äußeren Faserlage bedeckte Inhalt der Flächen größer, insbesondere deutlich größer, als der unbedeckte.

Bevorzugt sind die zur Anordnung der Seitenelemente vorgesehenen Flächen nicht von der äußeren Faserlage bedeckt.

Unter der Annahme, dass der Querträger quaderförmig ist, bedeckt die äußere Faserlage zumindest die beiden durch Länge und Breite gebildeten Flächen sowie die beiden durch Länge und Höhe gebildeten Flächen zumindest bereichsweise.

In einer Ausführungsform des erfindungsgemäßen Querträgers ist der Querträger so ausgebildet, dass diese mindestens eine Hohlkammer zumindest an den Flächen des Querträgers, die zur Anbindung an die Seitenelemente vorgesehen sind, verschließbar ist. Der Druckluftspeicher kann der Versorgung von Luftfedern, mit denen die Sekundärfederung des Wagenkastens erfolgt, mit Druckluft dienen.

In einer weiteren Ausführungsform ist die mindestens eine äußere Faserlage des Querträgers aus einem Endlosfaser-Roving und/oder einem Gewebe gebildet, welches in eine ausgehärtete Kunststoffmatrix eingebettet ist. Als Endlosfaser-Roving wird dabei ein Bündel, Strang oder Multifilamentgarn aus weitgehend parallel angeordneten Endlosfasern bezeichnet. Als Gewebe ist ein Faserhalbzeug zu verstehen, das durch Verweben von Endlosfasern entstanden ist.

Ein weiterer Aspekt der Erfindung betrifft ein Drehgestell für ein Schienenfahrzeug, welches mindestens zwei Radsätze aufweist, die über Seitenelemente mit einem erfindungsgemäßen Querträger aus einem FKV, der als Hohlkammerprofil ausgebildet ist, verbunden sind, wobei sich die mindestens drei Hohlkammern des Querträgers parallel zu den Radsätzen des Drehgestells erstrecken und in einer Richtung parallel zu der als Fahrtrichtung des Drehgestells vorgesehenen Richtung nebeneinander angeordnet sind.

Vorteilhaft weist ein Drehgestell dieser Bauart ein hohes Leichtbaupotenzial bei verbesserter Gesamtsteifigkeit auf.

Vorzugsweise wird die Primärfederung des Drehgestells gegenüber den Rädern bzw. Radsätzen mittels mindestens zweier, parallel zu den Achsen der Radsätze angeordneter Torsionsstäbe aufgebracht. Jeder dieser Torsionsstäbe kann platzsparend in einer Hohlkammern des Querträgers angeordnet sein und den Querträger an seinen offenen Flächen zur Anbindung durch an die Radsätze, z. B. über Achshebel, durchdringen. Jeder der Torsionsstäbe kann bereichsweise mit dem Querträger drehfest verbunden sein.

Ein weiterer Aspekt der Erfindung betrifft ein Verfahren zur Herstellung eines Querträgers für ein Drehgestell, welches zumindest die folgenden Verfahrensschritte aufweist:
a) Fertigen mindestens dreier langgestreckter Hohlprofile aus einem Faser-Kunststoff-Verbund, wobei ein erstes der Hohlprofile eine erste langgestreckte Seitenfläche aufweist, die so ausgebildet ist, dass ein zweites der Hohlprofile mit einer ersten langgestreckten Seitenfläche des zweiten Hohlprofils formschlüssig an der ersten Seitenfläche des ersten Hohlprofils angeordnet werden kann, und das zweite Hohlprofil eine zweite langgestreckte Seitenfläche aufweist, die so ausgebildet ist, dass ein drittes der Hohlprofile mit einer ersten langgestreckten Seitenfläche des dritten Hohlprofils formschlüssig an der zweiten Seitenfläche des zweiten Hohlprofils angeordnet werden kann;
b) Formschlüssiges Anordnen der ersten Seitenfläche des ersten Hohlprofils an der ersten Seitenfläche des zweiten Hohlprofils und der zweiten Seitenfläche des zweiten Hohlprofils an der ersten Seitenfläche des dritten der Hohlprofile, so dass die entstehenden Grundflächen der Anordnung keine Stufe aufweisen;
c) Umwickeln der Anordnung aus Verfahrensschritt b) mit mindestens einer aus einem mit einem Matrixmaterial vorimprägnierten Faserhalbzeug gebildeten Faserlage zur Herstellung eines Querträgers, wobei die Faserlage zumindest bereichsweise die Grundflächen der Anordnung sowie eine von der ersten verschiedene, zweite langgestreckte Seitenfläche des ersten Hohlprofils und eine von der ersten verschiedene, zweite langgestreckte Seitenfläche des dritten Hohlprofils bedeckt, und Aushärten des Matrixmaterials der mindestens einen Faserlage.

Im Sinne der Erfindung handelt es sich bei einem langgestreckten Hohlprofil um ein Hohlprofil, das in einer Raumrichtung eine als Länge bezeichnete, größere Abmessung als, insbesondere deutlich größere Abmessung als, z. B. eine mehr als doppelt so große Abmessung wie, in den anderen beiden Raumrichtungen aufweist. Ein solches Hohlprofil hat im Allgemeinen einen viereckigen, im Speziellen z. B. trapezförmigen oder parallelogrammförmigen oder rechteckigen, Querschnitt in einer Ebene senkrecht zur Länge. Die Querschnitte der Hohlprofile, aus denen der Querträger gebildet ist, können sowohl nach Flächeninhalt als nach Form gleich oder voneinander verschieden sein.

An den beiden das Hohlprofil begrenzenden Flächen, deren Kanten keine Längen sind, ist das Hohlprofil offen, also sein inneres Volumen zugängig. An den übrigen Flächen ist das Hohlprofil geschlossen, also das innere Volumen des Hohlprofils nur über zerspanend in die Flächen eingebrachte Aussparungen zugängig. Bei den als Seitenflächen des Hohlprofils bezeichneten Flächen handelt es sich jeweils um eine dieser geschlossenen Flächen.

Die Hohlprofile sind so ausgebildet, dass zwei der Hohlprofile formschlüssig nebeneinander angeordnet werden können, wobei die entsprechenden Seitenflächen in Kontakt miteinander sind, und zwar dergestalt, dass jede der beiden Flächen der Anordnung, die aus jeweils zwei so nebeneinander angeordneten Seitenflächen der Hohlprofile bestehen, dass ihr Flächeninhalt der Summe aus den Flächeninhalten der entsprechenden Seitenflächen entspricht, eine ebene oder leicht gekrümmte Fläche ist, die aus ebenen oder leicht gekrümmten Teilflächen bestehen kann, die in einem von 0° verschiedenen Winkel zueinander angeordnet sein können, aber keine Stufe oder kein Versatz zwischen den beiden besagten Seitenflächen der Hohlprofile besteht. Ein weiteres Hohlprofil ist so ausgebildet, dass eine seiner Seitenflächen formschlüssig an einer der Seitenflächen der Anordnung, die nicht Teil der Grundfläche der Anordnung ist und damit einer der Seitenflächen eines der Hohlprofile der Anordnung ist, angeordnet werden kann, so dass die wiederum entstehenden Grundflächen dieser Anordnung, die aus jeweils drei so nebeneinander angeordneten Seitenflächen der Hohlprofile bestehen, dass ihr Flächeninhalt der Summe aus den Flächeninhalten der entsprechenden drei Seitenflächen entspricht, eine ebene oder leicht gekrümmte Fläche ist, die aus ebenen oder leicht gekrümmten Teilflächen bestehen kann, die in einem von 0° verschiedenen Winkel zueinander angeordnet sein können, aber keine Stufe oder kein Versatz zwischen den drei besagten Seitenflächen der Hohlprofile besteht. Falls der herzustellende Querträger mehr als drei Hohlkammern umfasst, werden weitere Hohlprofile entsprechend der Anzahl an Hohlkammern nach dem oben beschriebenen Schema gefertigt und angeordnet.

In einer Ausführungsform des erfindungsgemäßen Verfahrens erfolgt das Fertigen zumindest eines, bevorzugt aller, der Hohlprofile in Verfahrensschritt a) in Faserwickeltechnik (Filament Winding). Beim Wickeln der Hohlprofile können z. B. Kohlenstoff-Endlosfaser-Rovings auf einen Wickelkern abgelegt werden. Der Wickelkern kann an seinen Enden Wickelpins aufweisen, damit die Fasern auf einfache Weise umgelenkt werden können und nicht verrutschen. Als Matrixmaterial kann z. B. ein Epoxidharz verwendet werden, mit welchem die Fasern nach dem Wickeln imprägniert werden. Daran anschließend erfolgt die Aushärtung des Matrixmaterials des Hohlprofils.

Die stufenlose Grundflächen aufweisende Anordnung aus mindestens drei Hohlprofilen wird im Verfahrensschritt c) mit einem vorimprägnierten Faserhalbzeug, das mindestens eine Lage Verstärkungsfasern, z. B. Kohlenstofffasern, aufweist, so umwickelt, dass zumindest alle geschlossenen Flächen der Anordnung zumindest bereichsweise von der äußeren Faserlage bedeckt sind. Die Fasern des Faserhalbzeugs sind vorimprägniert, also bereits mit dem noch nicht ausgehärteten Matrixmaterial des FKV, z. B. einem Reaktionsharz, getränkt.

Das Umwickeln der Anordnung aus mindestens drei Hohlprofilen erfolgt bevorzugt mit einem vorimprägnierten Endlosfaser-Roving und/oder einem vorimprägnierten Gewebe. In einer Ausführungsform des erfindungsgemäßen Verfahrens erfolgt das Umwickeln mit mehr als einer Faserlage durch stoßversetztes Umwickeln mit mehr als einer Prepreg-Matte, wobei die Fasern des Prepregs vorzugsweise als Gewebe vorliegen. Besonders bevorzugt kann das Umwickeln mit mehreren stoßversetzt angeordneten Prepreg-Gewebematten erfolgen, wobei sowohl Gewebe mit Faserwinkeln von +/- 45° als auch Gewebe mit Faserwinkeln von 0°/90° eingesetzt werden.

Durch die erfindungsgemäße Einzelfertigung der Hohlprofile und dem anschließenden Umwickeln zur Herstellung des Querträgers können vorteilhaft die gewünschten mechanischen Eigenschaften der einzelnen Hohlprofile und des Gesamtträgers belastungsgerecht eingestellt werden. Insbesondere kann die gewünschte finale Wandstärke des Querträgers durch den Verfahrensschritt des Umwickelns auf besonders einfache Weise erzielt werden. Das erfindungsgemäße Verfahren ist im Kontext des Leichtbaus als besonders wirtschaftlich anzusehen, da in kurzer Zeit viel Material verarbeitet werden kann.

In einer weiteren Ausführungsform weist das erfindungsgemäße Verfahren einen weiteren Verfahrensschritt auf, der sich an die Verfahrensschritte a) bis c) anschließt. Dieser Verfahrensschritt d) umfasst eine zerspanende Bearbeitung des Querträgers zur Einbringung mindestens einer Aussparung in mindestens eine der Flächen des Querträgers. Die Aussparungen dienen insbesondere dazu, Komponenten des Drehgestells am Querträger zu befestigen.

Ein weiterer Aspekt der Erfindung betrifft die Verwendung des erfindungsgemäßen Querträgers für ein Drehgestell mit Torsionsstab-Primärfederung. Insbesondere kann ein solches Drehgestell mindestens zwei Torsionsstäbe zur Federung der Räder bzw. Radsätze gegenüber dem Drehgestell aufweisen, die platzsparend in jeweils einer der mindestens drei Hohlkammern des Querträgers angeordnet und bereichsweise drehfest mit dem Querträger verbunden sind.

Im Rahmen dieser Beschreibung wird im Sinne der Kürze der Begriff "mindestens ein(e)" verwendet, welcher bedeuten kann: eins, genau eins, mehrere (z. B. genau zwei, oder mehr als zwei), viele (z. B. genau drei oder mehr als drei), etc. Dabei muss "mehrere" oder "viele" nicht unbedingt bedeuten, dass es mehrere oder viele identische Elemente gibt, sondern mehrere oder viele im Wesentlichen funktional gleiche Elemente.

Die Erfindung ist nicht auf die dargestellten und beschriebenen Ausführungsformen beschränkt, sondern umfasst auch alle im Sinne der Erfindung gleich wirkenden Ausführungsformen. Ferner ist die Erfindung auch nicht auf die speziell beschriebenen Merkmalskombinationen beschränkt, sondern kann auch durch jede beliebige andere Kombination von bestimmten Merkmalen aller insgesamt offenbarten Einzelmerkmale definiert sein, sofern sich die Einzelmerkmale nicht gegenseitig ausschließen, oder eine spezifische Kombination von Einzelmerkmalen nicht explizit ausgeschlossen ist.

Die Erfindung wird im Folgenden durch Ausführungsbeispiele anhand von Figuren erläutert, ohne auf diese beschränkt zu sein.

Dabei zeigt die
Fig. 1a den Querträger in einer perspektivischen Ansicht,
Fig. 1b eine Grundfläche des Querträgers,
Fig. 1c eine Seitenfläche des Querträgers,
Fig. 1d eine offene, zur Anordnung der Seitenelemente eines Drehgestells vorgesehene Fläche, und
Fig. 2 ein Drehgestell mit Torsionsstab-Primärfederung aufweisend den Querträger in einer perspektivischen Ansicht.

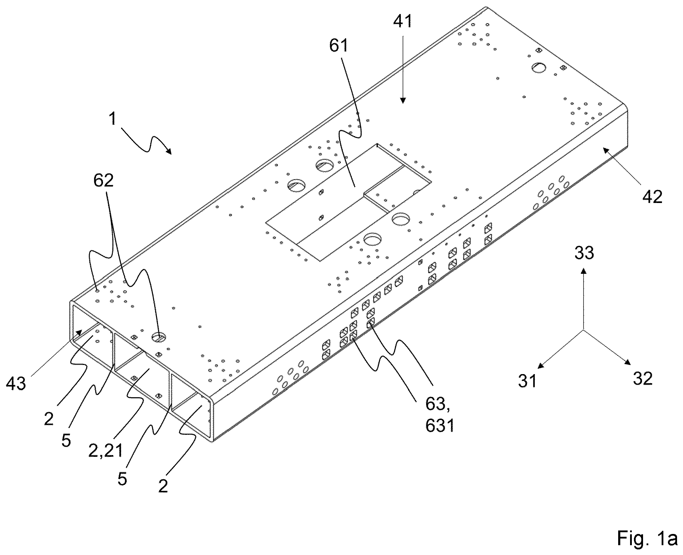

Fig. 1a zeigt einen quaderförmigen Querträger 1, der als Hohlkammerprofil mit drei Hohlkammern 2 ausgebildet ist. Die Hohlkammern sind langgestreckt und weisen in Längsrichtung 31 eine deutlich größere Ausdehnung als in Breitenrichtung 32 und in Höhenrichtung 33 auf. Der Querträger ist insofern plattenförmig, als dass seine Ausdehnung in Längsrichtung 31 und Breitenrichtung 32 deutlich größer als in Höhenrichtung 33 ist. Der Querträger 1 hat zwei parallele, ebene Grundflächen 41, von denen eine in Fig. 1a sichtbar ist. Die Grundflächen 41 werden durch Aneinanderreihung der drei Hohlkammern 2 in Breitenrichtung 32 gebildet. Des Weiteren hat der Querträger 1 zwei zueinander parallele, geschlossene Seitenflächen 42, von denen eine in Fig. 1a sichtbar ist, und zwei zueinander parallele, offene Flächen 43. Die offenen Flächen 43 sind zur Anordnung von Seitenelementen (nicht dargestellt) des Drehgestells, in das der Querträger angeordnet werden kann, ausgebildet. Die Hohlkammern 2 sind durch Stege 5 untereinander abgegrenzt, wobei die Stege 5 aus den Wandungen der Hohlprofile gebildet sind, aus denen der Querträger 1 hergestellt ist.

Die Grundflächen 41 und die Seitenflächen 42 sind von einer äußeren Faserlage bedeckt (nicht dargestellt).

Der Querträger 1 weist mehrere im Anschluss an seine Herstellung zerspanend in seine Flächen 41, 42 eingebrachte Aussparungen auf. Bei der großen Aussparung 61 handelt es sich um die Aufnahme eines Drehzapfens (nicht dargestellt). In Längsrichtung 31 links und rechts von der Aussparung 61 sowie an den offenen Flächen 43 können Verschlusselemente (nicht dargestellt) in bzw. an der mittleren Hohlkammern 21 angeordnet sein, die den Querschnitt der mittleren Hohlkammer 21 vollständig bedecken und die Hohlkammer 21 in zwei abgeschlossene Teilvolumina unterteilen. Diese beiden Teilvolumina können als Druckluftspeicher zur Versorgung von auf der Grundfläche 41 angeordneten Luftfedern (nicht dargestellt) mit Druckluft dienen. Die Bohrungen 62 dienen der Befestigung verschiedener Komponenten (nicht dargestellt) des Drehgestells. In die Vierkant-Bohrungen 63 sind zur lösbaren Befestigung von z. B. den dem Drehgestell zugeordneten Getrieben und/oder Motoren und/oder Bremsanlagenkomponenten etc. (nicht dargestellt) vierkantförmige und damit verdrehgesicherte Inserts 631 gesteckt, die eine Gewindebohrung aufweisen. Diese gewähren eine für FKV-Bauteile optimierte Lasteinleitung.

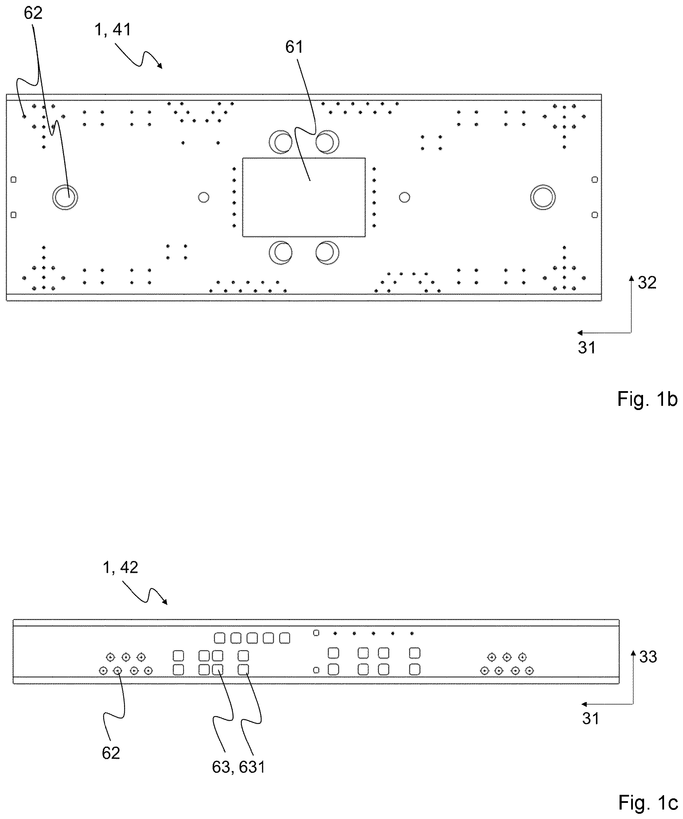

Fig. 1b zeigt den Querträger 1 in einer Draufsicht auf eine der beiden parallelen Grundflächen 41, die jeweils durch Kanten in Längsrichtung 31 und in Breitenrichtung 32 begrenzt werden. Die Grundflächen sind mit einer äußeren Faserlage bedeckt (nicht dargestellt). In die Grundflächen sind Aussparungen 61 sowie verschiedene Bohrungen 62 eingebracht.

Fig. 1c zeigt den Querträger 1 in einer Draufsicht auf eine der beiden parallelen Seitenflächen 42, die jeweils durch Kanten in Längsrichtung 31 und in Höhenrichtung 33 begrenzt werden. Die Seitenflächen sind mit einer äußeren Faserlage bedeckt (nicht dargestellt). In die Grundflächen sind verschiedene Bohrungen 62 sowie Vierkant-Bohrungen 63 mit Vierkant-Inserts 631 eingebracht.

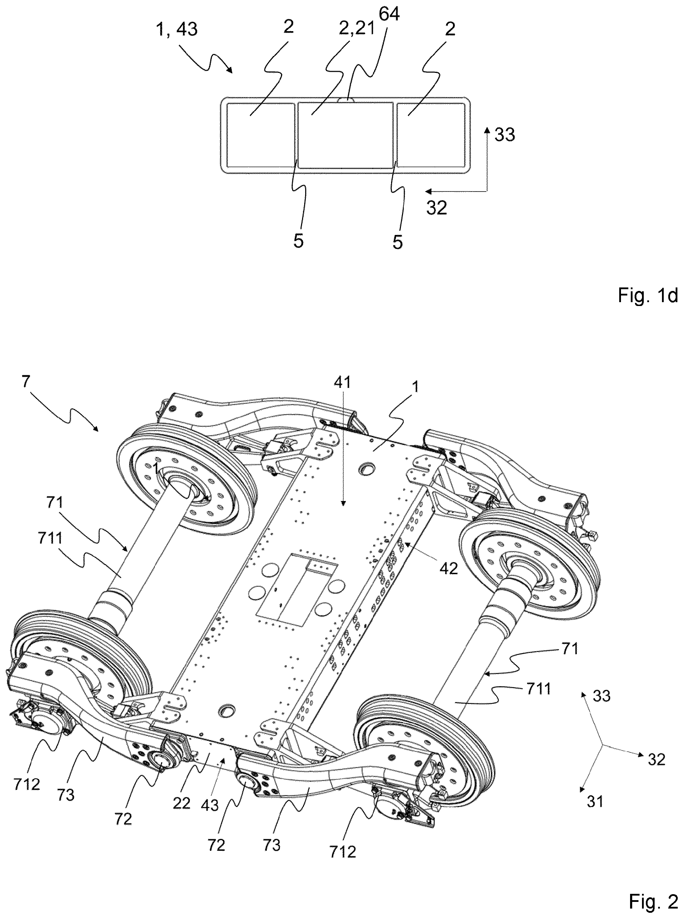

Fig. 1d zeigt den Querträger 1 in einer Draufsicht auf eine der beiden offenen Flächen 43, die jeweils durch Kanten in Breitenrichtung 32 und in Höhenrichtung 33 begrenzt werden. Durch die offenen Flächen 43 ist das innere Volumen der drei Hohlkammern 2 zugängig. Die mittlere Hohlkammer 21 dient im verschlossenen Zustand als Druckluftspeicher, wobei die Aussparung 64 für eine Kondenswasser-Ablassschraube vorgesehen ist. Die drei Hohlkammern 2 sind durch Stege 5 voneinander abgegrenzt.

Fig. 2 zeigt ein Drehgestell 7 mit Torsionsstab-Primärfederung, aufweisend den Querträger 1. Das Drehgestell 7 hat zwei Radsätze 71, deren Achsen 711 parallel zur Längsrichtung 31 des Querträgers 1 ausgerichtet sind. Im inneren Volumen der beiden äußeren der Hohlkammern (verdeckt) des Querträgers 1 sind Torsionsstäbe 72 angeordnet. Diese sind an den offenen Flächen 43 aus dem Querträger geführt und jeweils an den, den Querträger 1 überragenden Enden mit einem Seitenelement in Form eines Federhebelarms 73 drehfest verbunden. Jeder Federhebelarm 73 wirkt auf ein Achslager 712 der Radsätze 71. Die mittlere der Hohlkammern des Querträgers 1 dient als Druckluftspeicher und ist deshalb an der offenen Fläche 43 mit einer Platte 22 in Form ihres Querschnitts verschlossen.

### Bezugszeichen

- 1: Querträger
- 2: Hohlkammer
- 21: Mittlere Hohlkammer
- 22: Platte
- 31: Längsrichtung
- 32: Breitenrichtung
- 33: Höhenrichtung
- 41: Grundfläche
- 42: Seitenfläche
- 43: Offene Fläche
- 5: Steg
- 61: Aussparung für Drehzapfen
- 62: Bohrung
- 63: Vierkant-Bohrung
- 631: Vierkant-Insert mit Gewinde
- 64: Aussparung für Kondenswasser-Ablassschraube
- 7: Drehgestell
- 71: Radsatz
- 711: Achse
- 712: Achslager
- 72: Torsionsstab
- 73: Federhebelarm

## Patentansprüche

1. Querträger (1) für ein Drehgestell (7) mit mindestens zwei Radsätzen (71), die über Seitenelemente (73) mit dem Querträger (1) verbindbar sind, wobei der Querträger (1) als Hohlkammerprofil aus einem Faser-Kunststoff-Verbund ausgebildet ist und mindestens drei nebeneinander angeordnete Hohlkammern (2) aufweist, die über mindestens eine äußere Faserlage verbunden sind, wobei die äußere Faserlage zumindest bereichsweise zumindest die Flächen (41, 42) des Querträgers (1) bedeckt, die nicht zur Anordnung der Seitenelemente (73) vorgesehen sind; **dadurch gekennzeichnet, dass** eine der mindestens drei Hohlkammern (21) als Druckluftspeicher ausgebildet ist.

2. Querträger (1) nach Anspruch 1, **dadurch gekennzeichnet, dass** die mindestens eine äußere Faserlage aus einem Endlosfaser-Roving und/oder einem Gewebe gebildet ist.

3. Drehgestell (7) für ein Schienenfahrzeug, aufweisend mindestens zwei Radsätze (71), die über Seitenelemente (73) mit einem Querträger (1) nach Anspruch 1 oder 2 verbunden sind, wobei sich die mindestens drei Hohlkammern (2) des Querträgers (1) parallel zu den Radsätzen (71) des Drehgestells (7) erstrecken und in einer Richtung (32) parallel zur vorgesehenen Fahrtrichtung des Drehgestells (7) nebeneinander angeordnet sind.

4. Drehgestell (7) nach Anspruch 3, **dadurch gekennzeichnet, dass** im inneren Volumen von mindestens zwei der mindestens drei Hohlkammern (2) des Querträgers (1) jeweils mindestens ein Torsionsstab (72) angeordnet ist, der mit dem Querträger (1) bereichsweise drehfest verbunden ist, wobei der Querträger (1) von den Endbereichen der Torsionsstäbe (72) überragt wird und diese Endbereiche jeweils mit einem auf einen Radsatz (71) wirkenden Seitenelement (73) drehfest verbunden sind.

5. Verfahren zur Herstellung eines Querträgers (1) für ein Drehgestell (7) nach Anspruch 3 oder 4, aufweisend zumindest folgende Verfahrensschritte:
a) Fertigen mindestens dreier langgestreckter Hohlprofile aus einem Faser-Kunststoff-Verbund, wobei ein erstes der Hohlprofile eine erste langgestreckte Seitenfläche aufweist, die so ausgebildet ist, dass ein zweites der Hohlprofile mit einer ersten langgestreckten Seitenfläche des zweiten Hohlprofils formschlüssig an der ersten Seitenfläche des ersten Hohlprofils angeordnet werden kann, und das zweite Hohlprofil eine zweite langgestreckte Seitenfläche aufweist, die so ausgebildet ist, dass ein drittes der Hohlprofile mit einer ersten langgestreckten Seitenfläche des dritten Hohlprofils formschlüssig an der zweiten Seitenfläche des zweiten Hohlprofils angeordnet werden kann;
b) Formschlüssiges Anordnen der ersten Seitenfläche des ersten Hohlprofils an der ersten Seitenfläche des zweiten Hohlprofils und der zweiten Seitenfläche des zweiten Hohlprofils an der ersten Seitenfläche des dritten Hohlprofils, so dass die entstehenden Grundflächen (41) der Anordnung keine Stufe aufweisen;
c) Umwickeln der Anordnung aus Verfahrensschritt b) mit mindestens einer aus einem mit einem Matrixmaterial vorimprägnierten Faserhalbzeug gebildeten Faserlage zur Herstellung eines Querträgers (1), wobei die Faserlage zumindest bereichsweise die Grundflächen (41) der Anordnung sowie eine von der ersten verschiedene, zweite langgestreckte Seitenfläche (42) des ersten Hohlprofils und eine von der ersten verschiedene, zweite langgestreckte Seitenfläche (42) des dritten Hohlprofils bedeckt, und Aushärten des Matrixmaterials der mindestens einen Faserlage.

6. Verfahren nach Anspruch 5, **dadurch gekennzeichnet, dass** das Fertigen zumindest eines der Hohlprofile in Verfahrensschritt a) in Faserwickeltechnik durchgeführt wird.

7. Verfahren nach Anspruch 5 oder 6, **dadurch gekennzeichnet, dass** in Verfahrensschritt c) ein stoßversetztes Umwickeln mit mehreren aus jeweils einer Prepreg-Matte gebildeten Lagen erfolgt.

8. Verfahren nach einem der Ansprüche 5 bis 7, **dadurch gekennzeichnet, dass** sich an das Verfahren ein Verfahrensschritt d) anschließt, der Folgendes beinhaltet:
d) Zerspanendes Bearbeiten des Querträgers (1) zur Einbringung mindestens einer Aussparung (61, 62, 63, 64) in mindestens eine der Flächen (41, 42) des Querträgers (1).

9. Verwendung des Querträgers (1) nach Anspruch 1 oder 2 für ein Drehgestell (7) mit Torsionsstab-Primärfederung.

## Claims

1. Cross member (1) for a bogie (7) with at least two wheel sets (71) which can be connected to the cross member (1) via side elements (73), wherein the cross member (1) is formed as a hollow chamber profile made of a fiber-plastic composite and has at least three hollow chambers (31) arranged next to one another (2) which are connected via at least one outer fiber layer, wherein the outer fiber layer at least partially covers at least those surfaces (41, 42) of the cross member (1) which are not intended for an arrangement of the side elements (73); **characterized in that** one of the at least three hollow chambers (21) is formed as a compressed air reservoir.

2. Cross member (1) according to claim 1, **characterized in that** the at least one outer fiber layer is formed from an endless fiber roving and/or a fabric.

3. Bogie (7) for a rail vehicle, comprising at least two wheel sets (71) which are connected to a cross member (1) according to claim 1 or 2 via side elements (73), wherein the at least three hollow chambers (2) of the cross member (1) extend parallel to the wheel sets (71) of the bogie (7) and are arranged next to one another in a direction (32) parallel to the intended direction of travel of the bogie (7).

4. Bogie (7) according to claim 3, **characterized in that** at least one torsion bar (72) is arranged in the inner volume of at least two of the at least three hollow chambers (2) of the cross member (1), wherein the torsion bar is connected in a rotationally fixed manner to the cross member (1) in certain areas, wherein the cross member (1) protrudes beyond the end areas of the torsion bars (72) and these end areas are each connected in a rotationally fixed manner to a side element (73) acting on a wheel set (71).

5. Method for manufacturing a cross member (1) for a bogie (7) according to claim 3 or 4, comprising at least the following method steps:
a) manufacturing at least three elongated hollow profiles from a fiber-plastic composite, wherein a first of the hollow profiles has a first elongated side surface which is formed such that a second of the hollow profiles can be arranged with a first elongated side surface of the second hollow profile in a form-fitting manner on the first side surface of the first hollow profile, and the second hollow profile has a second elongated side surface which is formed in such a way that a third of the hollow profiles can be arranged in a form-fitting manner with a first elongated side surface of the third hollow profile on the second side surface of the second hollow profile;
b) arranging the first side surface of the first hollow profile on the first side surface of the second hollow profile and the second side surface of the second hollow profile on the first side surface of the third hollow profile in a form-fitting manner so that the resulting base surfaces (41) of the arrangement do not have a step;
c) wrapping the arrangement from process step b) with at least one fiber layer formed from a fiber semi-finished product pre-impregnated with a matrix material to produce a cross member (1), wherein the fiber layer covers at least in certain areas the base surfaces (41) of the arrangement and a second elongated side surface (42) of the first hollow profile, which is different from the first elongated side surface, and a second elongated side surface (42) of the third hollow profile, which is different from the first elongated side surface, and curing the matrix material of the at least one fiber layer.

6. Method according to claim 5, **characterized in that** the manufacturing of at least one of the hollow profiles in the process step a) is carried out using fiber winding technology.

7. Method according to claim 5 or 6, **characterized in that** in the process step c) a staggered wrapping with several layers formed from a prepreg mat is carried out.

8. Method according to one of claims 5 to 7, **characterized in that** the method is followed by a process step d) which includes the following:
d) Machining of the cross member (1) to introduce at least one recess (61, 62, 63, 64) into at least one of the surfaces (41, 42) of the cross member (1).

9. Use of the cross member (1) according to claim 1 or 2 for a bogie (7) with a torsion bar primary suspension.

## Revendications

1. Traverse (1) pour un bogie (7) avec au moins deux jeux de roues (71) qui peuvent être reliés à la traverse (1) par le biais d'éléments latéraux (73), dans laquelle
la traverse (1) est conçue comme profilé à chambres creuses en un composite de matière plastique et de fibre et présente au moins trois chambres creuses (2) agencées les unes à côté des autres qui sont reliées par le biais d'au moins une couche de fibres extérieure, dans laquelle la couche de fibres extérieure recouvre au moins par endroits au moins les surfaces (41, 42) de la traverse (1) qui ne sont pas prévues pour l'agencement des éléments latéraux (73); **caractérisée en ce que** l'une des au moins trois chambres creuses (21) est conçue comme réservoir d'air comprimé.

2. Traverse (1) selon la revendication 1, **caractérisée en ce que** la au moins une couche de fibres extérieure est formée à partir d'une mèche de fibre continue et/ou un tissu.

3. Bogie (7) pour un véhicule sur rail présentant au moins deux jeux de roues (71) qui sont reliés à une traverse (1) selon la revendication 1 ou 2 par le biais d'éléments latéraux (73), dans lequel les au moins trois chambres creuses (2) de la traverse (1) s'étendent parallèlement aux jeux de roues (71) du bogie (7) et sont agencées les unes à côté des autres dans un sens (32) parallèlement au sens de la marche prévu du bogie (7).

4. Bogie (7) selon la revendication 3, **caractérisé en ce que** respectivement au moins une barre de torsion (72) est agencée dans le volume intérieur d'au moins deux des au moins trois chambres creuses (2) de la traverse (1), barre qui est reliée à la traverse (1) par endroits de manière immobile en rotation, dans lequel la traverse (1) dépasse des zones d'extrémité des barres de torsion (72), et ces zones d'extrémité sont reliées respectivement de manière immobile en rotation à un élément latéral (73) agissant sur un jeu de roues (71).

5. Procédé de fabrication d'une traverse (1) pour un bogie (7) selon la revendication 3 ou 4, présentant au moins les étapes de procédé suivantes :
a) la fabrication d'au moins trois profilés creux allongés en un composite de matière plastique et de fibres, dans lequel un premier des profilés creux présente une première surface latérale allongée qui est conçue de sorte qu'un deuxième des profilés creux puisse être agencé avec une première surface latérale allongée du deuxième profilé creux par complémentarité de formes au niveau de la première surface latérale du premier profilé creux, et le deuxième profilé creux présente une seconde surface latérale allongée qui est conçue de sorte qu'un troisième des profilés creux puisse être agencé avec une première surface latérale allongée du troisième profilé creux par complémentarité de formes au niveau de la seconde surface latérale du deuxième profilé creux ;
b) l'agencement par complémentarité de formes de la première surface latérale du premier profilé creux au niveau de la première surface latérale du deuxième profilé creux et de la seconde surface latérale du deuxième profilé creux au niveau de la première surface latérale du troisième profilé creux, de sorte que les surfaces de bases (41) produites de l'agencement ne présentent aucun étage ;
c) l'enroulement de l'agencement issu de l'étape de procédé b) avec au moins une couche de fibres formée à partir d'un semi-produit de fibres préimprégné avec un matériau de matrice pour la fabrication d'une traverse (1), dans lequel la couche de fibres recouvre au moins par endroits les surfaces de base (41) de l'agencement ainsi qu'une seconde surface latérale (42) allongée, différente de la première, du premier profilé creux et une seconde surface latérale (42) allongée, différente de la première, du troisième profilé creux, et le durcissement du matériau de matrice de la au moins une couche de fibres.

6. Procédé selon la revendication 5, **caractérisé en ce que** la fabrication au moins de l'un des profilés creux est exécutée dans l'étape de procédé a) dans la technique d'enroulement de fibre.

7. Procédé selon la revendication 5 ou 6, **caractérisé en ce que** dans l'étape de procédé c), un enroulement décalé est effectué avec plusieurs couches formées respectivement d'une natte préimprégnée.

8. Procédé selon l'une quelconque des revendications 5 à 7, **caractérisé en ce qu'**une étape de procédé d) suit le procédé, laquelle contient ce qui suit :
d) l'usinage par enlèvement de copeaux de la traverse (1) pour l'introduction d'au moins un évidement (61, 62, 63, 64) dans au moins l'une des surfaces (41, 42) de la traverse (1).

9. Utilisation de la traverse (1) selon la revendication 1 ou 2 pour un bogie (7) avec une suspension primaire à barre de torsion.
